# EUROPEAN PATENT APPLICATION

(11) **EP 4 570 065 A1**
(43) Date of publication of application: **18.06.2025**
(21) Application number: 24220301.6
(22) Date of filing: 16.12.2024
(51) Int. Cl.: A01K 47/06, A01K 29/00

(54) **SELECTIVE POWER MANAGEMENT IN A BEEHIVE MONITORING SYSTEM**

(30) Priority: 15.12.2023 EP 23217378
(71) Applicant: Bee2Cloud UG (haftungsbeschränkt), 64287 Darmstadt (DE)
(72) Inventor: SASLOGLOU, Konstantinos, 64287 Darmstadt (DE)
(74) Representative: Zahn, Matthias

(57) **Abstract**

Beehive equipment (100) for monitoring and controlling conditions at a beehive comprises sensors (110), actuators (120) and a controller (130). The controller (130) adjusts the power consumption of the sensors (110) and the actuators (120) by selectively controlling their power consumption individually, and according to bee requirements, such as pre-defined temperature and the humidity. The controller (130) comprises a computer module that is a machine-learning tool (131) and that has been trained with (i) data regarding operation parameters of reference bee equipment such as temperature and humidity, as well as (ii) data regarding bee activities.

## Description

### Technical Field

In general, the disclosure relates to technical equipment and to controlling the energy consumption of its components, and more in particular, the disclosure relates to equipment that supports the operation of a beehive.

### Background

Simplified, beehives are artificial structures for honey bees to live in, and usually one hive serves a single bee colony.

Human beekeepers work in view of bee-growing seasons: the beekeepers place the beehive in spring and may harvest the honey in autumn (or winter). At least during that season, the beekeepers regularly inspect the hives by being physically present. To name only a few examples, the beekeepers
- check the health state of the colonies,
- clean the hives,
- strengthen them to withstand environmental conditions such as high temperature or excess humidity,
- relocate hives to other locations, and (last but not least),
- collect the honey (i.e., harvest honey).

The inspection items are interrelated. For example, temperature and humidity are related to the risk that the colonies suffer from external parasitic mites, such as varroa mites.

As the bees and their keepers usually live in separate areas, almost any inspection and follow-up activity would require the beekeepers to travel. Even more: in some regions there is more nomadic beekeeping than stationary beekeeping. There are efforts for transportation in terms of travel time (such as for the beekeepers), vehicle fuel and so on, but these efforts should not be neglected.

There is a trend to install technical equipment, and some equipment helps the beekeeper to be less physically present.

Technical equipment can keep some operation parameters inside the hives at appropriate values. The skilled person is familiar with control loops that can be implemented with microcontrollers, sensors, and actuators. To take the temperature (T) and/the or humidity (H) as examples for the parameters, the sensors comprise electronic thermometers or hygrometers, the actuators can comprise heaters and coolers, and fans to move air within the hive or to allow air flow from outside to inside and vice versa.

Technical equipment can also be extended by sensors in combination with data transmitters. The beekeeper could watch parameters without having to travel. For example, the beekeeper watches weight changes. Beehives having reached certain weights are to be relocated, or are ready for harvest.

Technical equipment can be associated with control loops that are extended to remote computers. For example, the mentioned data transmitters can be updated to data receivers (i.e., "transceivers") so that the remote computer processes sensor data (from the hive) and provides control data (to the hive).

However, technical equipment requires energy, usually in the form of electrical energy or "power", but for beehives that are located away from human settlements, a connection to a power grid may be available in some rare cases only.

Therefore, insufficiencies in energy supply create several technical problems.

### Summary

The disclosure relates to beehive equipment for monitoring and controlling conditions at a beehive. The beehive equipment comprises sensors, actuators, and a controller.

The controller is adapted to adjust the power consumption of the sensors and the actuators by selectively controlling the power consumption of sensors and actuators individually, and according to bee requirements: A first requirement is that a pre-defined percentage of bees survives at pre-defined phases, such as for example phases in a bee-growing season. A second requirement is that within the beehive, the temperature and the humidity remain within pre-defined values.

The controller comprises a computer module that is a machine-learning tool and that has been trained with (i) data regarding operation parameters of reference bee equipment such as temperature and humidity, as well as (ii) data regarding bee activities. The bee activities that have been monitored prior to training define the requirements in terms, for example, survival and temperature/humidity values.

Optionally, the machine-learning tool has also been trained with data regarding a power supply unit.

Optionally, the data regarding the operation parameters of the reference bee equipment comprise: battery parameters with voltage and current values, and actuator data, with fan ON/OFF durations, heater operation data, cooler operation data.

Optionally, the data regarding bee activities comprise, selected from the following: the number of bees obtained from sensors that are bee counters; the weight of the beehive, from sensors that are scales; weight changes, from the scales; and an indication of the quantity of honey, from sensors that are active post-harvesting.

Optionally, the machine-learning tool in the controller is implemented as an artificial neural network ANN for that network weights have been obtained during training.

Optionally, the machine-learning tool in the controller has also been trained with power parameters and has thereby been enabled to make predictions regarding: the time points in the future for that temperature values become critical being excess temperature values, and control instructions for the components to obtain control instructions at present time and for the future.

Optionally, the controller is further adapted to adjust the power consumption of a data unit.

Optionally, the controller instructs actuators to operate in full capacity during selected time-frames only.

Optionally, a further bee requirement can be that the amount of honey increases by a pre-defined increase rate.

A method to operate beehive equipment for a beehive comprises that a heater and a cooler operate in ON/OFF mode, that a fan controls air flow inside the beehive and controls air flow from inside out and vice versa, that conditions are monitored -with sensors for temperature, humidity, and weight (collectively: condition monitor). The heater, the cooler, the fan, and the condition monitor are powered by a battery that is located at the beehive. The method comprises communicating data regarding conditions to a user computer, to inform a computer user about the technical status of the beehive as a technical system that is located remotely to the computer user;

The method is characterized by monitoring the battery; and depending on the status of the battery, switching the heater, the cooler, and/or the fan off, if the battery has a status that indicates less remaining capacity.

Optionally, monitoring the battery comprises to measure the battery voltage and to determine the remaining capacity. Switching the heater, the cooler and/or the fan off is implemented by a controller that has a machine-learning tool and that has been trained with (i) data regarding operation parameters of reference bee equipment such as temperature and humidity, as well as (ii) data regarding bee activities, so that the following bee requirements remain satisfied: (first) a pre-defined percentage of bees survives at pre-defined phases, and (second) within the beehive, the temperature and the humidity remain within pre-defined values.

The controller can switch between different levels of power consumption, wherein from low consumption to high consumption, the levels can be characterized by 1) a deep sleep of the controller, 2) measuring by sensors, 3) transmitting data by data units, generating sound by actuators, and 4) heating or cooling.

### Brief Description of the Drawings

FIGS. 1A and 1B illustrate block diagrams of a beehive and of beehive equipment having components;
FIG. 2 illustrates bee parameters over time;
FIG. 3 illustrates a block diagram of a machine-learning tool under training;
FIG. 4 illustrates a block diagram of the machine-learning tool being in use in the controller to control the power-consumption of the components;
FIG. 5 illustrates an overview to a system that comprises the beehive equipment; and
FIG. 6 illustrates a generic computer.

### Detailed Description

### Overview

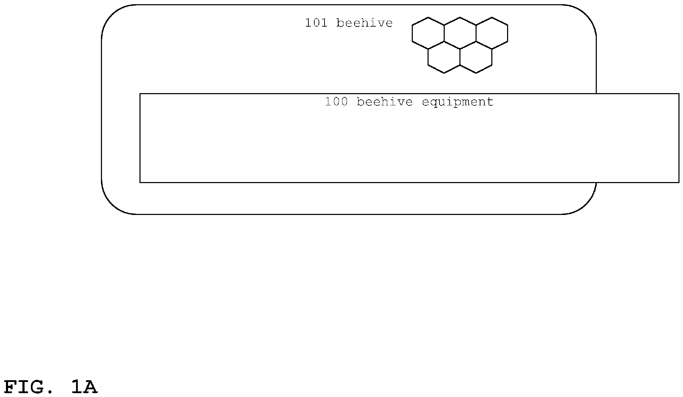

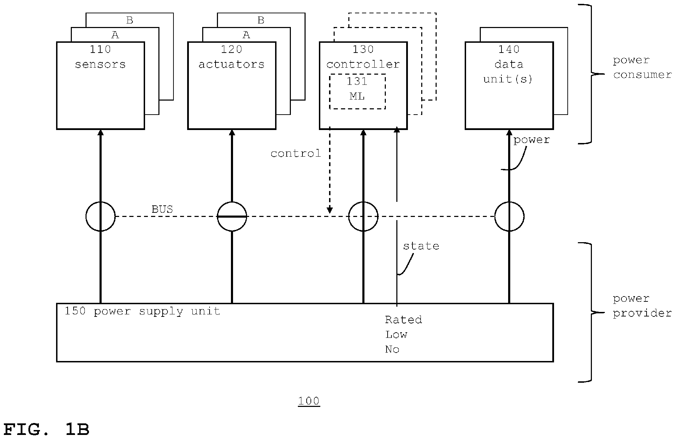

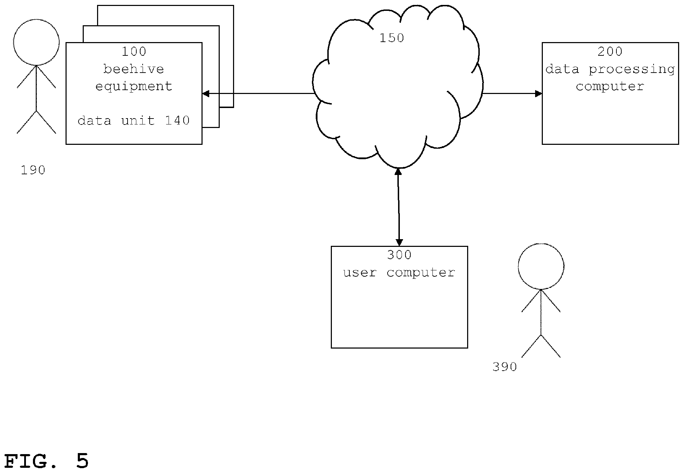

In the following, the description describes a monitoring platform for remotely monitoring beehives (cf. item 101 in FIG. 1A). The platform can be considered as a system with equipment at a beehive (cf. item 100 in FIG. 1B) and with computers (cf. items 200, 300 FIG. 5) that are remote to the beehive. The operation of the platform in general, and the operation of the equipment is based on conditions at the beehive.

For example, the beehive equipment monitors the temperature and relative humidity of the beehive's environment (i.e., external conditions) or in the beehive itself (i.e., internal conditions). It can further monitor (internal) parameters, such as the instant weight W (i.e., the weight at a particular point in time, for processing weight data in real time and for reacting in real-time).

In addition to provide monitoring, the beehive equipment can provide heating and cooling capabilities, usually to compensate for external conditions, in winter and summer, respectively. In this way, the health state of the colony can be maintained at relatively high levels and - compared to traditional beehives without such equipment - this eventually results in higher honey yield.

From the viewpoint of the beekeeper, the geographical location of the beehive can be extremely remote. Therefore, the beekeeper usually can not interact with the beehive regularly. The equipment should have a certain autarky from the beekeeper. For example, battery-powered equipment should consume power at minimal levels so that the battery (or one battery charge) would last a whole season.

For this purpose, the description explains the equipment by way of example as a method of monitoring and controlling the temperature und the relative humidity. The equipment comprises elements such as sensors and actuators. As temperature and relative humidity are related, the actors are not necessarily heaters or coolers but also elements to control the air flow (such as fans, movable windows, shutters etc.).

The energy management involves hierarchical classification of the associated components in terms of power consumption. An optimized method for switching on and off those components ensures longer provision of power to the heating or cooling system.

As it will be explained with more details, the platform with its equipment may provide advantages at least in the following:
The number of physical inspections per season can be reduced. Although there is no direct effect on the beehive, the overall energy consumption can be reduced as well (e.g., due to less traveling).

Monitoring can increase the yield of honey, by providing critical information to the beekeeper. For example, the beekeeper can be informed about the weight W of the beehive.

Provided that monitoring is combined with acting (e.g., to control temperature and humidity), it is expected that the bees have relatively better health. In other words, the environment within the beehive can become more "bee-friendly", which results in stronger colonies and subsequently higher honey yield.

FIGS. 1A and 1B illustrate block diagrams of beehive 101 and of beehive equipment 100.

FIG. 1A illustrates beehive 101. A honeycomb just symbolizes the bees. Beehive equipment 100 is illustrated with some overlay to beehive 101 to symbolize that equipment 100 can be located inside beehive 101, or outside beehive 101 (e.g., in case of scales or the like, even partly below the hive).

Equipment (and its components) can be provided to beehive 101 as an add-on. In other words, existing beehives can be updated with equipment 100.

FIG. 1B illustrates a block diagram of beehive equipment 100 having components 110, 120, 130, 140 and 150. Beehive equipment 100 is not identical with beehive 101, but equipment and beehive form a unit. It is possible to install equipment 100 to an existing beehive.

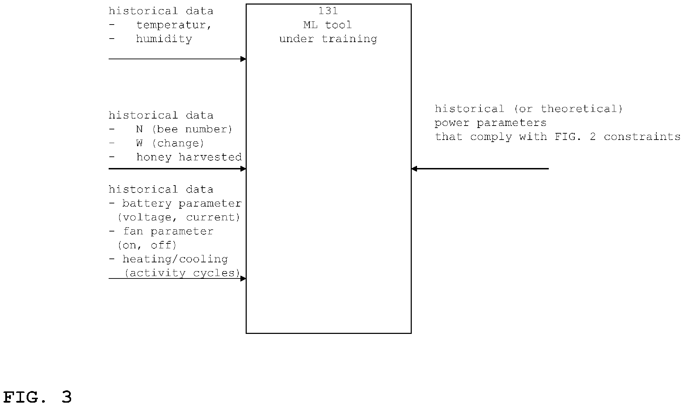

The components can be differentiated into sensors 110 (e.g., sensor 110-A, sensor 110-B etc.), actuators 120 (e.g., actuator 120-A, actuator 120-B etc.), at least one controller 130 (such as a microcontroller, optionally with machine-learning tool 131, cf. FIGS. 3-4), data units 140 (such as data transmitters, data receivers, using radio channel or cable channels), and at least one power supply unit 150, to supply electrical energy (such as for example a battery, or a connector to a power grid).

Components 110-140 are power consumers, and power supply unit 150 is a power provider. As used herein, the term "power" refers to energy in the form of electrical energy. The figure symbolizes power consumption by thin vertical arrows from power supply unit 150 to components 110-140.

Modifying the power consumption is possible, and the figure illustrates this symbolically with circle symbols (for switches, or power regulator). The thickness and the position of the small line within the circle symbolizes that controller 130 can adjust the power consumption of individual components.

In the example of FIG. 1B for an arbitrary point in time, view sensors 110, controller 130 and data unit 140 consume power, but actuators 120 do not.

The "switches" can be controlled from controller 130 via a bus (thin horizontal line, dashed). The symbols are simplified, it should be possible to selectively control the power consumption for individual components (i.e., -A, -B) separately.

The figure is simplified in that it does not show differences in power consumption between the components. The description gives details below. For example, actuator 120 may consume more power than sensor 110.

The block diagram introduces components 110-140 by its function. The skilled person is able to integrate components structurally. For example, the function of controller 130 and of data unit 140 can be integrated to a single printed circuit board (PCB).

Components 110-140 (as wells as power supply unit 150 being a component as well) have different technical states. From a high-level perspective, states can be binary states, such as "normal operation", and "failure".

For example, a sensor provides a measurement result (or not), an actuator may operate or not (e.g., a fan rotates, or not because a bee may sit inside), a controller reacts on sensor readings and instructs the actuators, but it might fail. Data units may communicate data, or not. For example, a radio transceiver in a cellular network may not be able to establish a radio channel with a base station.

Describing the states of components 110, 120, 130, 140 by binary states is a simplification. In view of the overall problem statement to face insufficiencies in power supply, the description also introduces states that are related to the power consumption of the components.

By way of example, the figure illustrates power supply unit 150 as having 3 states:
- Rated power: (voltage, current etc. are within predefined tolerances in a first range)
- Low power: (voltage, current etc. are within predefined tolerances in a second range)
- No power: (outside the tolerances).

In principle, most of components 110-140 can have power states, that are, for example, binary consumption states:
- high, and
- low consumption.

It is also possible to differentiate consumption states at a granularity with further levels, such as
- minimal consumption,
- normal consumption, and
- excess consumption.

The skilled person is familiar with the concept to have
- passive states (i.e., states that can be determined so that controller 130 is being informed)
- active states (i.e., states that can be set by control signals from controller 130, to activate a component, to de-activate a component, to activate or deactivate the component partially "semi-activate").

For example, a sensor should provide measurement results at sampling intervals ΔT. For relatively long ΔT, the sensor would show minimal consumption. The state could be modified by a control signal (from controller 130, a "wake-up call" to activate it) to make ΔT relatively short (thereby changing to normal or excess consumption)

For example, an actuator could be switched from normal consumption to minimal consumption (e.g., by switching off a fan).

For example, controller 130 comprises sub-components such as RAM memory, one or more processors such as CPU and co-processor, and communication tools (e.g., radio transceivers) and so on. Some of these sub-components can be activated or deactivated. For example, the content of the RAM memory can be moved to permanent memory so that the RAM can be switched off. Or, the co-processor can be configured in ultra-low-power (ULP) mode to take sensor readings and wake up the CPU as needed. The skilled person usually uses the sleep metaphor to identify operation modes by energy consumption (e.g., from highest to lowest: "active mode", "light sleep", "deep sleep", "hibernate").

As used herein, controller 130 could operate in "sleep mode" or could operate in "active mode". While the activation or deactivation of sub-components can be arranged by the operating system of the controller (e.g., its firmware), it would also be possible to consider the sub-components for that power is managed as described herein.

Data units could operate at different transmission time intervals (similar to ΔT of the sensors). In a power saving mode, a data unit communicates less data than in normal mode.

However, power supply unit 150 does not have consumption states, but has provision states (e.g., rated, low power, no power). Depending on the implementation, the states is more passively to determine but not actively to be modified. (Switching to a back-up battery would increase the power capacity, but having an extra battery is usually no possible.)

Power supply unit 150 can be implemented, for example, by
- a battery (i.e., a primary battery for single-use, and/or a secondary battery that is rechargeable),
- a cable to an external power grid (e.g., to 230 volt mains),
- a renewable energy unit, such as a photovoltaic unit, or a wind generator

The skilled person can also implement power supply unit 150 as a combination thereof.

The following scenarios should explain the constraints, by way of example:
- For an implementation with as "battery only", the battery would have to supply the technical equipment during a relatively long time between inspection visits. The beekeeper may place the hive in spring and may harvest the honey in autumn, but during such a bee-growing season, the battery can not be recharged and can not be replaced. Such implementations do not allow the use of certain components, such as air-conditioning with vapor-compression refrigeration may be prohibitively power-consuming.
- An implementation with a connection to a power grid with have a back-up battery, but in comparison to a "battery only" implementation, the back-up battery would have relatively small capacity.
- For an implementation with a battery that can be charged by the photovoltaic unit or by the wind generator.

The state of power supply unit 150 has influence to the components 110-140, for "battery only" implementation for example in the following:
- In case that of "Rated power" and, the battery is being discharged. At a particular point in time, it may change its state (e.g., to "low power").
- In case of the "low power" state (e.g., starting at t2), the battery would not provide sufficient energy to a heater (or cooler).
- In case of "no power", all components 110-140 would fail. Such a state should generally be avoided.

The state may depend on the temperature. Some batteries may recover. For example, a battery may drop to "low power" in a cold night, but would recover to "rated power" the following day. But for simplicity of illustration, it should be assumed that batteries change from "rated" to "low" to "no" in that order, not vice versa.

A state-of-the art approach to address battery insufficiency with over-dimensioning the battery is not desired. In other words, the battery could have a relatively high capacity so that at the end of the season it would still have a substantial charge in reserve.

### Selective power provisioning according to bee requirements

In view of the power limitations, controller 130 interacts with sensors 110, actuators 120 and data units 140 to distribute power. This can comprise that some components would have to be deactivated (or semi-deactivated).

Thereby, controller 130 can apply rules that are either
- predefined rules, or
- rules that are learned (cf. FIGS. 3-4, for a machine-learning tool).

There is a general policy that the health of the bee colony should be preserved.

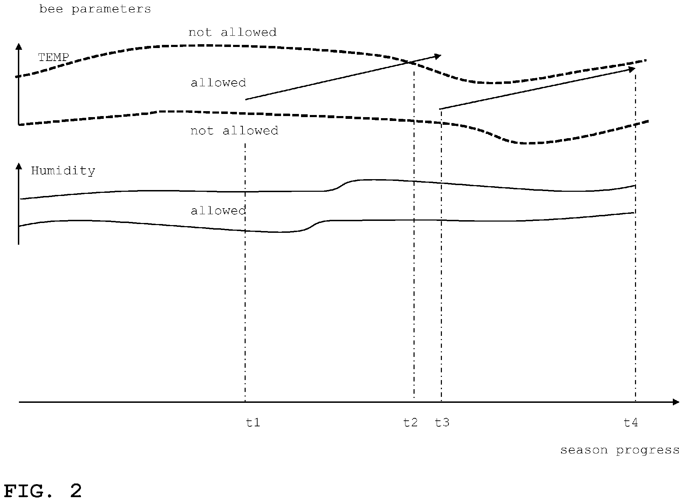

FIG. 2 illustrates bee parameters over time. In the example, the progress of time should correspond to a bee-growing season.

From an overall perspective, technical equipment helps the bees along the following "bee parameters":
- A certain number of bees (i.e., percentage) should survive (at certain phases of the season). The skilled person is familiar with such calculations.
- Pre-defined humidity and temperature values should not be exceeded (at certain phases of the season the values may be different). Ideal temperature values are between approximately 34 and 43 °C, and ideal humidity values are between 40 % and 60 % (relative humidity). Dry environments may cause other problems.

Of course, the increase in honey should be within pre-defined increase rates. A higher yield is more than welcome, but a weight increase may not be caused by extra honey only. There could be other reasons: The wooden structure of the beehive may absorb rain water. Eventually, someboby may place a stone on top of the beehive. With relatively short sampling intervals of a few hours, the resulting sudden weight change can easily be regognized as an event that is not related to the honey production by the bees.

The bee parameters can be regarded as overall constraints that influence the amount of honey that eventually could be harvested.

The bee parameters change over time, here indicated with the progress of the season.

For example, the temperature should be within a certain "allowed" range, wherein deviations into a "non allowed" range need to be avoided (at least during predefined time-intervals).

The bee parameters can be obtained empirically. To stay with the temperature, the medium value in the "allowed range" would be the set point for the temperature control loop.

As already mentioned, controlling the temperature requires energy, for example for sensor 110-A being an electronic thermometer, actuator 120-A being a cooler, and so on. The description takes the temperature as an example for a parameter that would change if the state of a component would change.

As already mentioned, a state change (of the battery) could disable the operation of a particular component.

Assuming that at time point t1, the cooler (i.e. an actuator) fails (for lack of energy or for other reasons). The temperature would raise as indicated by an arrow, but would eventually go beyond the maximal temperature, at t2. Such a scenario - if relatively early in the season - would not be expected to occur.

Assuming that at time point t3, the cooler fails. The temperature would raise as indicated by the arrow, but would eventually stay within the allowed range, even at t4 when the season is over (or when the beekeeper inspects the hive again). Since towards the end of the season, the battery might fail (state to "low power"), controller 130 could pro-actively switch off the cooler, to save energy. Or, in a variation, controller 130 could eventually let the cooler operate at a power saving mode.

While the example of FIG. 2 illustrates that controller 130 can operate according to pre-defined rule, its is noted that the rule can be obtained by machine-learning (ML).

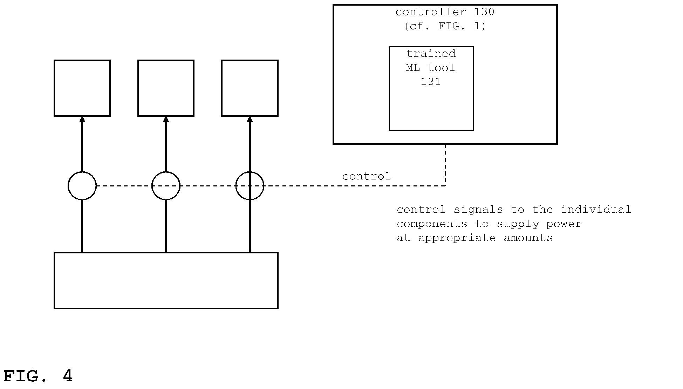

In that case, controller would use a machine-learning tool, details are to be explained with FIG. 3 (training), and FIG. 4 (operating the trained ML tool).

An ML-tool can be implemented to provide an input-to-output function based on computation weights that are identified during training. For example, the ML-tool can be an artificial neural network (ANN) for that network weights are identified by applying training data to the network input and to the network output (i.e., training).

FIG. 3 illustrates a block diagram of machine-learning tool 131 under training. The tool can be implemented as a computer module. During training is receives historical data, amount them
- data regarding operation parameters such temperature and humidity,
- data regarding bee activities, such as number of bees (from bee counter sensors), weight W or weight changes ΔW (from scales, being sensors as well), indication of the quantity of honey (that is available or that has been harvested),
- data regarding the other components, such as power supply unit 150 (e.g., battery parameters such as voltage, current), such as actuators (e.g., fan ON/OFF durations, or heater/cooler operation data, such as activity cycles.).

There is also input data (during training here at the output) such as historical (or theoretical) power parameters that would comply with the constraints (cf. FIG. 2).

ML-tool 131 is thereby enabled to make predictions, among them the following:
- the time points in the future for that temperature values become critical (cf. t2 with excess temperature), and
- control instructions for the components (e.g., to operate heater and cooler in ON/OFF modulation), with control instructions at present time and for the future.

FIG. 4 illustrates a block diagram of machine-learning tool 131 being in use in controller 130 to control the power-consumption of the components.

Having explained the basic principle to provide power selectively to components according to the status of the power supply unit, the description continues with an introduction to beehive-specific conditions, use-case scenarios, and further details.

FIG. 5 illustrates an overview to a system (i.e., the above-mentioned platform), with the following:
- Beehive equipment 100 (cf. FIG. 1) has data unit 140. Beehive equipment 100 can be available in a plurality, here merely symbolized by 3.
- Beekeeper 190 stands for the role of a person who inspect the beehive by being present. During operation of the system, beekeeper 190 would be absent.
- Data processing computer 200 is a computer with several functions, such as to perform some power consuming calculations, to pre-process monitoring data, to store data and so on. Computer 200 can be located in a server-farm. The skilled person would call this "cloud computer". The physical location of computer 200 is not relevant. As computer 200 is not necessarily visible (no user), it can be regarded as back-end computer. Computer 200 can be used for analytics, based on measurement data received from equipment 100.
- Communication system 150 has the function to communicatively couple beehive equipment 100 (via data unit 140) with data processing computer 200. System 150 can comprise a cellular network (with basis stations, and with data unit having the function of "mobile stations"), can comprise telecommunication channels (e.g., radio links, wired links), can comprises part LAN and/or WLAN connections. From a different view point, communication system 150 can partly be implemented by the Internet.
- User computer 300 is the computer that provides interaction with computer user 390. User 390 stands for the role of a person who monitors the beehive remotely. User 390 does not have to be present all of the time. It is possible that the roles of beekeeper 190 and user 390 would be performed by the same person.

Although FIG. 5 illustrates single components, it is possible to provide the system with multiple hives (and multiple equipment 100 per hive).

Processing data from multiple equipment (and from multiple seasons) can be required for training the machine-learning unit (cf. FIGS. 3-4). In other words, the ML units can be trained within computer 200, but can be used in controller 130 (of equipment 100).

It is also possible to implement equipment 100 for monitoring two beehives that are co-located.

### Beehive-specific conditions

Although at the first glance, beehives may appear similar, there are significant differences between individual hives. The conditions influence the honey yield.

No matter if the beehive has technical equipment (with components 110-150 of FIG. 1), there are external factors such as the following:
- Bee keeping is linked to the seasons of the year, simplified from spring to autumn and winter.
- Wheater conditions are generally not predictable, but values vary between extremes (e.g., temperature offset, for some geographical areas such as in Greece, between 40° C during summertime and 10° C degrees during winter).
- There is an inspection interval for the beekeeper to physically inspect the beehive (with the opportunity to replace at least the battery, or fully charge or recharge it), the inspection interval becoming a constraint for the battery.

It is further noted that environmental conditions not only influence the health of the bees, but also influence the operation of the equipment. For example, relatively high temperatures and humidity may be harmful to the components. For example, high temperatures in summer or cold temperatures in winter highly affect the battery performance.

### Sensor types

In the context of beehives, sensors 110 measure parameters that are - from an overall perspective - are related to the honey yield. Sensors 110 can be, for example, the following:
Temperature sensors measure the temperature. It is convenient to have different sensors for the inside temperature and for outside temperature. Also, sensors would be distributed to different locations (e.g., near the honeycomb). As explained with FIG. 2, the temperature can be a parameter that is related to the well-being of the bees.

Humidity sensors measure the humidity, and humidity within certain tolerance is important as well.

Weight sensors (or scales) measure the weight W of beehive 101 in total (i.e. with equipment 100), or of components (such as bee nests) in particular. The overall weight of the beehive changes over time. The bees carry pollen and - much simplified - a daily weight increase (or decrease, delta in general) can be estimated by a function with:
- the number of bees that live in beehive 101 (cf. FIG. 1A)
- the number of flights (the bee carry pollen into the hive, leading to a weight transfer from the field to the hive),
- the availability of "food" in the environment of the beehive,
- weather conditions (outside temperature, humidity, precipitations etc.)

Weight saturation (i.e. the daily wight reaches an end value) can be an indicator of pollen saturation. Once saturation has been detected, beehive 100 should be located to a different environment (where higher yield increase is expected).

More in detail, the so-called relative weight saturation can be measured as well. The weight W is a highly dynamic parameter. Even under that assumption (simplified assumption, hypothesis) that other parameters would be constant (e.g., parameters such as the number of bees, the weight of pollen and honey, food, etc.), the following phenomenon can be observed: As freshly made honey itself contains high levels of water that at some point within the same day the water evaporates. The weight W would therefore decrease due to this evaporation phenomenon alone. (With a suitable sampling interval, the weight sensor can be used to detect that phenomenon.)

Such a weight change monitored over a couple of hours can serve as an indicator for the beekeeper, and represents the state of beehive 100.

However, monitoring changes requires to measure W in repetitions (ΔT, sampling interval or "sampling rate" etc.) and communicating W data to the beekeepers (via data units 140).

Animal sensors may detect the presence of animals that act as honey predators. The potential presence of animals depends on the geography, and animals in question are, for example, wild bears and wild hogs. As the animals may take away some honey (and may damage the hive), there is a desired to act accordingly.

Other sensors can be provided to track events such as, for example, opening the hive by a non-authorized person.

A location sensor (e.g., a GPS sensor) can identify the geographical location of the beehive. It can be switched off (to save energy) as soon as the beehive has arrived at a permanent location.

In general, the sampling intervals of sensors depends on the phenomena to be monitored. As sensing requires power, the sampling intervals would be selected to be as long as possible but still short enough for monitoring the phenomena in appropriate time granularity. Different sensors usually use different sampling intervals.

There is also a technical problem to forward data (from sensors to the controller, and/or from the data units) at certain ΔT intervals, and forwarding data requires energy.

In case that sensors are implemented by microphones (for example in the function to sense the presence of animals), there are different parameters to take into account: recording or transmitting sound uses a sampling frequency for sounds (e.g., 20.000 Hz or higher), but such a sound sensor does not have to be active all the time (its operation can be interrupted so same energy, e.g. one minute in on-mode for recording or transmitting, one minute in off-mode). It is also possible to intermediately store sound data to transmitting audio data at a later point in time.

### Battery status as a special sensor

The battery state can be determined by a battery status sensor. It can be integrated into the battery. It is also possible to run a pre-defined test-scheme under control of controller 130.

Testing the status of a battery is known and established in the art. For example, vehicles batteries are inspected at vehicle service stations. The battery state is determined for a current point in time t.

The battery state can be described by parameters, such as for example,
- the voltage that is being measured (e.g., 12 V rated, but 12.5 V measured)
- the remaining charge-time from time-point t, being the expected duration until a time-point in the future, when the voltage drops below a threshold value.

### Actuator types

Heaters can be implemented by resistor heaters. The skilled person knows how to keep the bees in distance from the heaters (to avoid damages to the bees).

Coolers can be implemented in a variety of ways, for example by the following:
- Thermoelectric cooling can be provided by Peltier elements (that could also serve as heaters).
- Vapor-compression refrigeration (as in air-conditioning systems for buildings or vehicles) can be applied provided that sufficient power is available (e.g., for supply unit 150 having a line to a public grid).
- Ventilation can help to circulate the air so that the air eventually cools down. Ventilation can be provided by actuators such as fans. Further, windows or shutters can be opened or closed to control the air flow. There is a difference in the energy consumption, fans eventually need energy for a longer time interval than devices with short operation times (e.g., window openers).
   It is however noted that - depending on the outside temperature - ventilation alone might not be sufficient. For example, if in some areas the temperature reaches about 46° C and the sun would radiate to the hive, the bee colony would suffer fatalities. However, if proper temperature values can be provided (by cooling), the beehives may be placed in geographic areas that so far do not appear suitable for bee keeping.

The operation mode of the actuators can be season-dependent. For example, equipment 100 would operate in winter mode (remove humidity from hive 101 but add heat), or in summer mode (remove humidity and heat).

Sound generators may deter animals. There is - however - a constraint that the duration of sounds must be limited (for example, in sound pressure, in duration).

Animal deterrence may be implemented otherwise, such as by having the beehive fenced with electric pasture fences or the like.

Compared to sensors 110, actuators 120 are expected to be more energy consuming.

Some of the actuators can be deactivated to save energy, according to the bee parameters (cf. FIG. 2).

Some of the actuators are not related to the bee parameters. In other words, the risk of an animal attack may not be related to the temperature or to the humidity, but may be estimated otherwise. Sound generators are a candidate for being switched off (or being activated only for short time intervals).

### Data unit types

The selection of suitable data transmitters (or receivers) depends on a variety of conditions, among them the following:
- Radio transceivers could be part of a cellular network, but the network infrastructure (basis stations etc.) may not be available, especially for beehive that are placed in rural or mountainous areas. The skilled person can select the communication standard (that is usually called by generation from 1G to 5G.)
- Radio transceivers may operate in a periodic transmission mode, to communicate in relatively short activity intervals (e.g., minutes) but being in idle mode for most of the time (e.g., waiting times in hours). However, some sensor data (e.g., weight change during the day) should be communicated more frequently than other data (e.g., the detected attack by an animal).

### Power supply unit types (battery)

As already mentioned, unit 150 could be implemented with a battery. The battery may have the function of a back-up battery.

The capacity of the battery is a relevant parameter. It can be given in kWh or other units), but also in a time interval (cf. the inspection interval)

As batteries do age, the age of the battery is technical parameter. For example, a 3 years old battery that has been gone to a couple deep cycles most likely will last shorter (for example, every year the battery performs at 90% of the previous year).

A further parameter is the frequency by that the battery does supply power to the components. This as an analogy to the sampling frequency of a sensor.

In an example, the battery was a battery with a 7.2Ah rated capacity. The state was determined by measurement with a one-hour sampling rate (or sampling interval). This setup went through during a particular season (from February to November, 8.5 months). In the following season, the same physical battery lasted for almost 8 months. In other words, due to battery aging, the state of the battery changed earlier (to failure).

The battery can be a LiFePO₄ battery (Lithium iron phosphate) battery. The battery can be a battery of any type as long as it meets the electrical, environmental and physical requirements. The LiFePO₄ battery was selected due to high performance, safety, and relatively low weight.

### Power consumption classes

There are different levels of power consumption, and from low consumption to high consumption, the following examples are given: 1) deep sleep of the controller, 2) measuring (by sensors), 3) transmitting data, generating sound etc. (by data units, by actuators), and 4) heating/cooling (air con in general, by actuators).

The overall power consumption can be estimated as the sum Σ of the consumption for individual operation events. For example, an event can be the operation of the heater during a number of hours.

It is possible to differentiate the sum Σ as the sum for the winter events and the sum for the summer events. Equipment 100 operates differently during the season.

### Pulse-width modulation approach

The controller can instruct some actuators act according to a particular value. For example, the controller could instruct a multi-element heater to operate fully (e.g. all elements are powered) or to operate partially (e.g., some elements only).

It is also possible to control actuators accordingly to operate in full capacity during selected time-frames only. For example, a heater operating in a cycle ON-OFF-ON-OFF-ON-OFF would have the same effect as operating in partial mode.

In case that actuators are powered in circuits with transistors, the heat dissipation (and hence the power consumption) of the transistor is lower for ON/OFF (i.e., the transistor being a switch, pulse-width modulation) and higher for transistors being amplifiers.

### Method to operate equipment

A method to operate equipment 100 for beehive (101) can be summarized by the following. Equipment 100 can have a heater (i.e., and cooler) to operate in ON/OFF mode (cf. the pulse-width modulation).

A fan is provided to control air flow inside the beehive, and/or flow from inside out and vice versa.

A condition monitor (i.e., sensors for temperature, humidity, weight) communicates data regarding conditions to a remote computer (cf. FIG. 5 item 200 and 300) so that a computer user 390 can be informed about the technical status of the beehive as a technical system.

The heater, the fan, and the condition monitor (e.g., microcontroller 130) are powered by a battery that is located at the beehive.

As the battery gradually discharges (that is a problem), the method can be characterized by the following: monitoring the battery as well (e.g., voltage, or conducting tests similar to that for a car battery in the service station, optionally transmitting), and depending on the status of the battery (remaining capacity e.g., charged, less charged), switching the heater and/or fan off if the battery has a status that indicates less remaining capacity.

### Generic computer

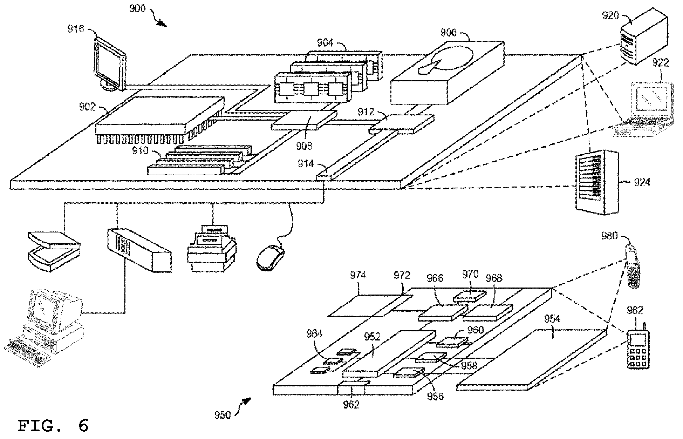

FIG. 6 illustrates an example of a generic computer device which may be used with the techniques described here. FIG. 6 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computers that have been illustrated by other figures. Computing device 950 is also intended to represent various forms of mobile devices, such as personal digital assistants, cellular telephones, smart phones, driving assistance systems or board computers of vehicles and other similar computing devices. For example, computing device 950 may be used as a frontend by a user to interact with the computing device 900. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, causes the computer to perform one or more methods, such as those described above. The information carrier is a computer-or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. Beehive equipment (100) for monitoring and controlling conditions at a beehive (101), the beehive equipment (100) comprising sensors (110), actuators (120) and a controller (130), the beehive equipment (100) **characterized in that**
the controller (130) is adapted to adjust the power consumption of the sensors (110) and the actuators (120) by selectively controlling the power consumption of sensors (110) and actuators (120) individually, and according to bee requirements:
(a) a pre-defined percentage of bees survives at pre-defined phases, and
(b) within the beehive (100), the temperature and the humidity remain within pre-defined values,
wherein the controller (130) comprises a computer module that is a machine-learning tool (131) and that has been trained with
(i) data regarding operation parameters of reference bee equipment such as temperature and humidity, as well as
(ii) data regarding bee activities.

2. Beehive equipment (100) according to claim 1, wherein the machine-learning tool has also been trained with data regarding a power supply unit (150).

3. Beehive equipment (100) according to any of claims 1 to 2, wherein the data regarding the operation parameters of the reference bee equipment comprise:
- battery parameters with voltage and current values, and
- actuator data, with fan ON/OFF durations, heater operation data, cooler operation data.

4. Beehive equipment (100) according to any of claims 1 to 3, wherein the data regarding bee activities comprise, selected from the following:
the number of bees obtained from sensors (110) that are bee counters (110);
the weight W of the beehive, from sensors (110) that are scales;
weight changes (ΔW), from the scales; and
an indication of the quantity of honey, from sensors (110) that are active post-harvesting.

5. Beehive equipment (100) according to any of claims 1 to 4, wherein the machine-learning tool (131) in the controller (130) is implemented as an artificial neural network (ANN) for that network weights have been obtained during training.

6. Beehive equipment (100) according to any of claims 1 to 5, wherein the machine-learning tool (131) in the controller (130) has also been trained with power parameters and has thereby been enabled to make predictions regarding:
the time points in the future for that temperature values become critical being excess temperature values, and
control instructions for the components to obtain control instructions at present time and for the future.

7. Beehive equipment (100) according to any of claims 1 to 6, wherein the controller (130) is further adapted to adjust the power consumption of a data unit (140).

8. Beehive equipment (100) according to any of claims 1 to 7, wherein the controller (130) instructs actuators (120) to operate in full capacity during selected time-frames only.

9. Beehive equipment (100) according to any of claims 1 to 8, wherein a further bee requirement is that the amount of honey increases by a pre-defined increase rate.

10. Method to operate beehive equipment (100) for a beehive (101), wherein the equipment (100) comprises (i) a heater and a cooler that operate in ON/OFF mode, (ii) a fan to control air flow inside the beehive (101) and to control air flow from inside out and vice versa, (iii) a condition monitor with sensors for temperature, humidity, and weight, wherein the heater, the cooler, the fan, and the condition monitor are powered by a battery that is located at the beehive; the method with communicating data regarding conditions to a user computer (300), to inform a computer user (390) about the technical status of the beehive (101) as a technical system that is located remotely to the computer user (390);
the method being **characterized by**
monitoring the battery; and
depending on the status of the battery, switching the heater, the cooler and/or the fan off, if the battery has a status that indicates less remaining capacity.

11. The method according to claim 10, wherein monitoring the battery comprises to measure the battery voltage and to determine the remaining capacity, and wherein switching the heater, the cooler and/or the fan off is implemented by a controller (130) that has a machine-learning tool (131) and that has been trained with (i) data regarding operation parameters of reference bee equipment such as temperature and humidity, as well as (ii) data regarding bee activities, so that the following bee requirements remain satisfied:
(a) a pre-defined percentage of bees survives at pre-defined phases, and
(b) within the beehive (100), the temperature and the humidity remain within pre-defined values.

12. The method according to claim 11, wherein the controller switches between different levels of power consumption, wherein from low consumption to high consumption, the levels are **characterized by** 1) a deep sleep of the controller, 2) measuring by sensors, 3) transmitting data by data units, generating sound by actuators, and 4) heating or cooling.
